# EUROPEAN PATENT SPECIFICATION

(11) **EP 2 211 480 B1**
(45) Date of publication and mention of the grant of the patent: **23.10.2013**
(21) Application number: 09290052.1
(22) Date of filing: 26.01.2009
(51) Int. Cl.: H04B 5/00, H04B 5/06

(54) **Wireless communication device for providing at least one near field communication service**
Drahtlose Kommunikationsvorrichtung zur Bereitstellung von mindestens einem Nahfeld-Kommunikationsdienst
Dispositif de communication sans fil pour fournir au moins un service de communication à champ proche

(43) Date of publication of application: 28.07.2010
(73) Proprietor: Motorola Mobility LLC, Libertyville, IL 60048 (US)
(72) Inventor: Buhot, Thomas, Toulouse 31400 (FR)
(74) Representative: Cross, Rupert Edward Blount

(56) References cited:
- EP-A- 1 798 867
- WO-A-2006/095212
- WO-A-2007/068993
- WO-A-2007/122439
- WO-A-2008/071924
- WO-A-2009/003534
- US-A1- 2007 190 939

## Description

### Field of the Disclosure

This disclosure relates to a wireless communication device for providing at least one Near Field Communication service to a user and a method of providing a Near Field Communication service by a wireless communication device.

### Background of the Disclosure

Near Field Communication (NFC) is a short-range wireless communication technology which enables the exchange of data between devices allowing users of NFC enabled devices to use NFC services such as performing contactless transactions, accessing digital content and connecting devices with a single touch.

NFC is based on contactless and Radio Frequency Identification (RFID) solutions, which typically consist of a tag or device storing a small amount of data and a reader. The reader, when activated, emits a short-range radio signal that when brought next to the tag, powers up a microchip on the tag, and allows for reading a small amount of data that is stored on the tag. However, NFC is different from other contactless or RFID technologies in that it has a very short operating distance and also allows two devices to interconnect. The effective distance of an NFC solution depends on the tag design and the reader, but is typically only a few centimetres. The underlying layers of NFC technology are based on ISO/IEC 14443, ECMA 340, ECMA 352, ETSI 102 613, and NFC forum standards.

Investigations are being performed into the use of NFC in mobile phones. The current main use cases for NFC in a mobile phone include:
Card emulation - the NFC enabled device can behave like an existing contactless NFC card;
Reader mode: the NFC enabled device can read a passive NFC tag, for example for interactive advertising;
Peer-to-Peer (P2P) mode: two NFC enabled devices can communicate together and exchanging information e.g. to set up a Bluetooth connection.

Examples of the different types of NFC services that may be available to an user of a mobile phone having NFC capability include:
Ticketing services such as mobile ticketing in public transport which is an extension of the existing contactless infrastructure, and electronic ticketing such as for airline tickets, concert/event tickets;
Payment services where for example the mobile phone acts as a debit/credit payment card or possibly electronic money;
Advertising services where for example the mobile phone is used to read NFC tags on advertising boards in order to access information easily whilst on the move;
Exchanging small amounts of data quickly such as electronic business cards, calendar synchronisation;
Bluetooth or Wi-Fi pairing where for example the process of activating Bluetooth or Wi-Fi between two devices can be achieved by a simple "touch" of the devices and thereafter communication takes place over a Bluetooth or Wi-Fi communication link;
Loyalty services, for example, the mobile phone acts as a loyalty card; and
Identity services, for example, the mobile phone acts as an identity card or key.

A mobile phone that supports NFC, and for example the card emulation mode, contains a secure element for storing different NFC application elements for use in providing the NFC services. The secure element may be a dedicated module or chipset that is part of the mobile phone or may be a removable component, such as the UMTS Integrated Circuit Card (UICC) also known as the SIM card or USIM card or a removable memory card.

When for example the mobile phone is in the card emulation mode and acts like a contactless card, a contactless reader can select the contactless NFC application elements stored in the secure element of the mobile phone and exchange Application Protocol Data Unit (APDU) commands with the NFC application elements so as to proceed with contactless transactions (as defined by the ISO14443-4 standard). This may involve retrieving cardholder banking information from the selected NFC application element(s).

As discussed above, different types of NFC services may be available and thus, different types of NFC application elements associated with the different types of NFC services, such as payment, transport, ticketing, or loyalty NFC elements, may be stored in the secure element. There can also be different NFC application elements of the same type at the same time stored in the secure element. For example, there may be several payment type contactless NFC application elements stored in the secure element, such as PayPass^{™} NFC application element from MasterCard®, Visa Smart Debit Credit^{™} (VSDC) NFC application element from Visa® or ExpressPay^{™} NFC application element from American Express®. Current payment application elements, such as the examples given above from Mastercard®, Visa® and American express®, are typically stand alone applications which usually run in their own secure environment (which is generally a global platform or JavaCard based) and are protected by a firewall of the runtime environment in the secure element (as defined, for example, by the JavaCard runtime environment or the global platform specification). This is because these payment application elements typically correspond to the reference contactless application elements developed and already deployed for contactless smartcards, where only one single contactless application element runs on a contactless smartcard and thus, they have not been designed to coexist or interface with other application elements.

Having a plurality of stand alone NFC application elements, particularly when there are several NFC application elements of the same type, for use in a mobile phone can raise a number of issues due to the fact that each NFC application element operates in isolation of the other elements. Such issues include, for example, difficulties for a user to manage such stand alone NFC application elements. For example, with stand alone application elements, when a user wishes to change dynamically the available NFC services which will involve changing the NFC application elements stored in the secure element, the user has to view and select each NFC application element separately. These issues are likely to increase as the number of available NFC services increase, and the number of application element providers increase.

In order to take account of specific issues that arise when providing NFC services in a mobile phone, an approach would be to modify the reference contactless application elements for NFC applications to allow, for example, interoperability or interfacing with other elements or OTA provisioning. However, this would require for the application element providers to modify their reference application elements to support these services on NFC devices which will involve extra cost, new code baseline, new deployment and new certification processes.

Some mobile phones include NFC managing applications which may run on an application processor of the mobile device and which activate NFC application elements and handle the NFC services, for example, for mobile payment, ticketing, transport, access etc.. These NFC managing applications can be native applications or Java applications. Each NFC managing application may manage several application elements from the same application provider at the same time. For example, a payment NFC managing application may support several payment card application elements and a ticketing NFC managing application may support different ticketing card application elements. These NFC managing applications enable a user to select a card (i.e. a card application element) among a list associated with the NFC application to pay, get on the bus, access a building, etc. A NFC managing application can handle card application elements of different types such as payment, ticketing or transport card applications from the same application provider.

As the number of NFC services and the number of application providers increases, in order to support several NFC managing applications from different application providers at the same time, many NFC managing applications, such as payment, ticketing, or access, are installed and may be running simultaneously on the NFC mobile phone. Since there is currently no interoperability between these different NFC managing applications and the different application providers, information cannot be shared even between two NFC managing applications supporting the same use case (such as payment, ticketing, transport, etc). For example, if a user installs two different payment NFC managing applications provided by two different banks (A & B) on an NFC mobile phone, the NFC managing application of the bank B cannot address cards from the bank A and vice versa. This means that from a user's point of view there may be several NFC managing applications from different application providers to access the same set of NFC services which makes accessing the NFC services more complicated and less user friendly. For example, it may not be possible for the user to list, access, and manage all the card application elements on the user's NFC mobile phone at once. Furthermore, since a card application element can only be managed by the associated NFC managing application, in order to use a given card application element for payment, transport, access, etc., the user has to remember with which NFC managing application the card application element is associated. In addition, the application element list information presented to the user on the mobile phone's user interface to select a card application element from the different NFC managing applications is not standardized and will differ from one NFC managing application to another depending on the application provider's specification.

European patent application publication no. EP1798867 describes a communications device having a NFC communicator and at least one secure element to provide secure data storage of transaction data representing or relating to a transaction. In one arrangement, a device has a number of secure elements each of which may have a different operating system and different applications platforms. The user selects a secure element via a user interface (generally a menu on a display) of the device. Where a secure element has a large number of applications platforms, the user may be given a menu option to select an application platform. The applications platform may be downloaded via the telecommunications network or via near field RF communication.

PCT application publication no. WO 2008/071924 describes a communication device having a near field RF communicator and at least one secure element separate from the near field RF communicator to provide secure data storage for transaction data representing or relating to a transaction. The device is configured to provide via a user interface a user with the capability to view data and/or applications stored on the secure element. The device may be configured, through its interface with the secure element, to enable the user to select secure element or contents within the secure element from a menu service provided by the user interface for display in a user friendly format.

PCT application publication no. WO 2007/122439 discloses an user interface that enables a user to select different NFC communication component configurations for different operation conditions of the mobile electronic multifunction device.

PCT application publication no. WO 2007/068993 describes a method and system for providing a user of a mobile terminal with additional information and control over various transaction processes (e.g. for a user to control basic access groups to enable certain access entities to access a group of NFC applications whilst excluding other NFC applications) and at the same time visibility to various transaction service providers. A user can define groups of applications and allocate these groups to entities causing the near field communication events e.g. via a 'teach in' phase. This process may be assisted by a kind of menu structure or assistant program to guide the user through the allocation procedure. A dedicated user interface is provided to adjust and modify the settings of the categories and their linking with each other

PCT application publication no. WO 2006/095212 describes a mobile terminal device comprising a smartcard module and a near field communication module. The smartcard module may include a number of different applications (e.g. loyalty card, transportation tickets, different credit cards). Each digital card is then separated from each other e.g. by number, valid date, name and issuer or service provider name.

PCT application publication no. WO 2009/003534 describes using a mobile device to check if portable items are to be stored or not in a handbag or pocket and/or to check if the appropriate items are present or not in the handbag or pocket. Profiles for portable items (which are usage and/or position dependent) are stored in memory together with one or more related settings for different applications for use by the mobile device.

US patent application publication no. US 2007/0190939 describes a method for provisioning and managing mobile device configuration over a near-field communication link.

### Brief Description of the Drawings

A wireless communication device for providing at least one Near Field Communication service to a user and a method of providing a Near Field Communication service by a wireless communication device, in accordance with the disclosure will now be described, by way of example only, with reference to the accompanying drawings in which:
FIG. 1 is a block schematic diagram of a communication system arrangement in accordance with an embodiment of the disclosure;
FIG. 2 is a block schematic diagram of a wireless communication device in accordance with an embodiment of the disclosure;
FIG. 3 is a schematic representation of example NFC application elements held in the NFC unit of FIG. 2 and example user interface elements of FIG. 2 in accordance with an embodiment of the disclosure;
FIG. 4 is a block schematic diagram of an example UICC card implementation of the NFC unit of the wireless communication device of FIG. 2;
FIG. 5 is a simplified schematic diagram representing an example flow of interactions between the user interface element and a NFC managing element when registering the NFC managing element in accordance with an embodiment of the disclosure;
FIG. 6 is a simplified schematic diagram representing an example flow of interactions between the user interface element and two NFC managing elements when gathering NFC service information in accordance with an embodiment of the disclosure;
FIG. 7 is a simplified schematic diagram representing an example flow of interactions between the user interface element and a NFC managing element during user selection of a NFC service in accordance with an embodiment of the disclosure; and
FIG. 8 is a flow diagram of a method for providing a NFC service by a wireless communication device in accordance with an embodiment of the disclosure.

### Detailed Description of the Drawings

In the following description, examples of embodiments of the disclosure will be described with respect to a mobile device operating within one or more wireless communication networks, such as a 2nd generation cellular communication system known as the Global System for Mobile communication (GSM) with General Packet Radio System (GPRS) capability, a 3rd generation cellular communication system such as an Universal Mobile Telecommunication system (UMTS), or Long Term Evolution (LTE) communication system. It will however be appreciated the present disclosure can be used in other types of wireless communication devices and networks, such as a subscriber unit, wireless user equipment, a portable telephone, a wireless video or multimedia device, a communication terminal, a personal digital assistant (PDA), a laptop computer, or any electronic device having wireless capability, such as a digital camera which can transfer pictures wirelessly. The term wireless communication device for providing at least one NFC service is thus intended to cover all electronic devices which have wireless capability to provide NFC services to a user.

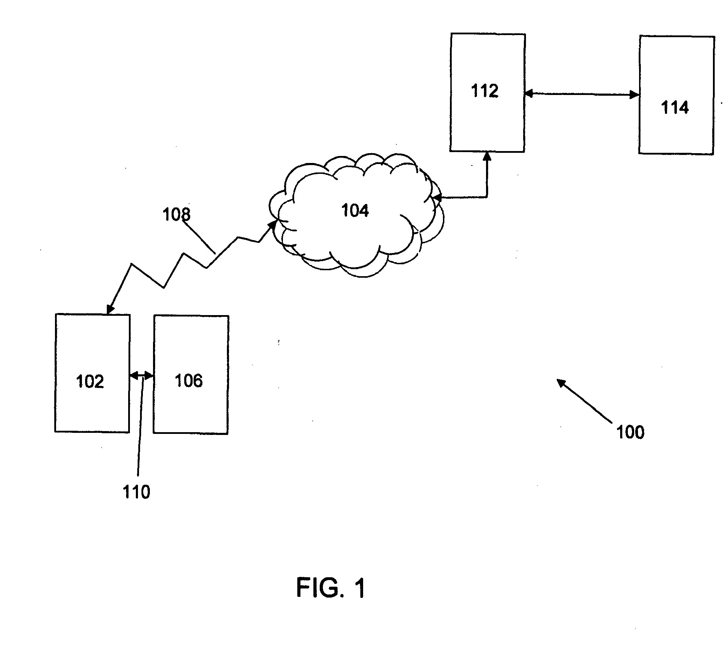

Referring firstly to FIG. 1, a communication system arrangement 100 comprises a mobile device 102 having NFC capability (that is, having wireless capability to provide NFC services to a user) and being capable of operating with a communication system 104 such as a GSM communication system. In the following, the communication system will be described as a GSM communication system but it will be appreciated that the disclosure may apply to any communication system and it is not intended to limit the disclosure to a GSM communication system. As is well known, the GSM communication system 104 provides a plurality of coverage areas or cells (not shown) served by base stations (not shown) with which the mobile device 102 can operate or communicate via radio communication links (such as link 108 shown in FIG. 1). Device 106 also has NFC capability and may be another mobile device capable of operating with the GSM communication system 104 or with another wireless communication system (not shown) or may be a fixed device such as a NFC tag or may be a reader device such as a contactless card reader (fixed or mobile). When the mobile device 102 and device 106 are close enough, for example within a couple of centimetres, a NFC communication link 110 can be established and data can be exchanged between the devices 102, 106.

In an example, the device 106 may be a contactless card reader which may be connected to a backend system (not shown) and the mobile device 102 can support a card emulation mode. A NFC communication link 110 is established between the mobile device 102 and the card reader device 106 to exchange data so that the mobile device 102 may enter a card emulation mode in which it acts as a contactless card and contactless transactions may then be performed.

In another example, the mobile device 102 and the device 106 may be devices having Bluetooth communication capability. A NFC communication link 110 is established between the mobile device 102 and the device 106 to exchange data so as to enable a Bluetooth communication link to be established between the devices for subsequent communications.

The mobile device 102 may act as a reader/writer or a tag.

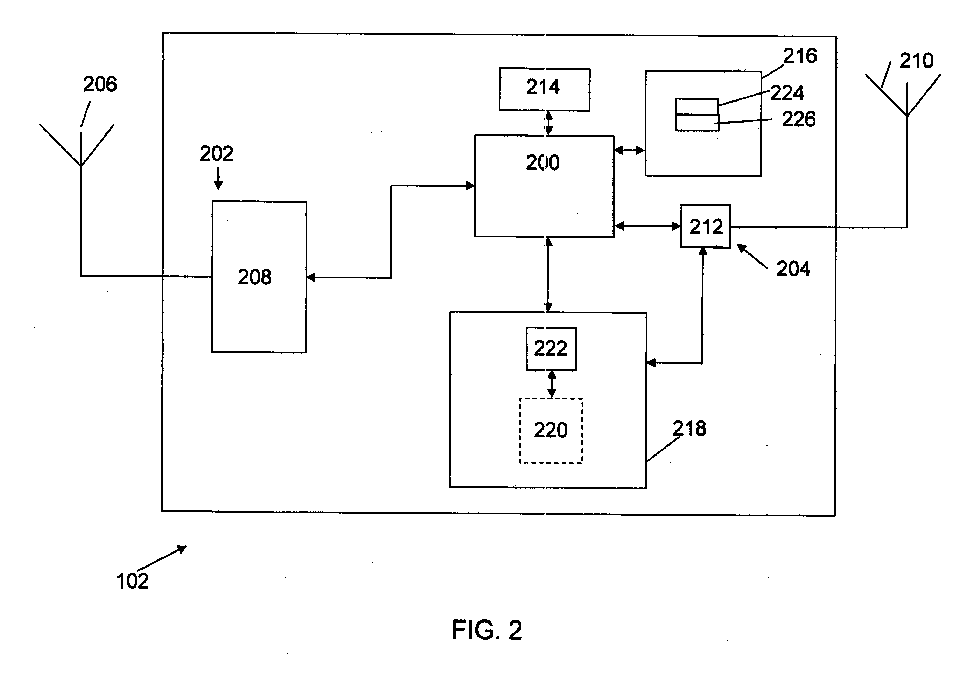

FIG. 2 is a block diagram of a wireless communication device, such as the mobile device 102 shown in FIG. 1, in accordance with an embodiment of the disclosure. As will be apparent to a skilled person, FIG. 2 shows only the main functional components of an exemplary mobile device 102 that are necessary for an understanding of the invention.

The mobile device 102 comprises a processing unit 200 for carrying out operational processing for the mobile device 102. The mobile device 102 also has a RF communication section 202 for providing wireless communication via a radio communication link 108 with the GSM communication system 104 and a NFC communication section 204 for providing NFC services via a NFC communication link 110. The mobile device may, for example, establish a NFC communication link with a reader having NFC capability via the NFC communication section 204 when the mobile device 102 is within a couple of centimetres of the reader. The RF communication section 202 typically includes, for example, an antenna 206, transmit and receive paths 208 including a modulation/demodulation section (not shown), and a coding/decoding section (not shown), as will be known to a skilled person and thus will not be described further herein. The NFC communication section 204 typically includes, for example, a NFC antenna 210 and a modulation/demodulation section 212, as will be known to a skilled person and thus will not be described further herein. The communication sections 202, 204 are coupled to the processing unit 200.

The mobile device 102 also has a Man Machine Interface MMI 214, including elements such as a key pad, microphone, speaker, display screen, for providing an interface between the mobile device 102 and a user of the device. The MMI 214 is also coupled to the processing unit 200.

The processing unit 200 may be a single processor or may comprise two or more processors carrying out the processing required for the operation of the mobile device 102. The number of processors and the allocation of processing functions to the processing unit is a matter of design choice for a skilled person. The mobile device 102 also has a program memory 216 in which is stored programs containing processor instructions for operation of the mobile device 102. The programs may contain a number of different program elements or sub-routines containing processor instructions for a variety of different tasks, for example, for: communicating with the user via the MMI 214; and processing signalling messages (e.g. paging signals) received from the communication system 104.

The mobile device 102 further comprises a NFC unit 218 which can act as a secure element to store at least one NFC application element for use in providing at least one NFC service. The NFC unit 218 may store only one NFC application element but typically, the NFC unit 218 will store a plurality of NFC application elements associated with a plurality of NFC services, with some of the services being of the same type. For example, the NFC unit 218 may store several contactless payment application elements from different service providers such as MasterCard®, Visa®, and American Express®. The NFC unit 218 is coupled to the processing unit 200 and may comprise a removable module or a module incorporated into the mobile device 102. The NFC unit 218 may also be coupled to the NFC communication section 204. Whether the module is removable or incorporated into the mobile device 102, the module may be a dedicated module whose sole function is for providing NFC services or may be a module that has other functions additional to providing NFC services.

When the NFC unit 218 includes a removable module (represented by the dotted box 220 in FIG. 2), an interface 222 is coupled to the processing unit 200 for interfacing between the removable module 220 and the processing unit 200. The removable module 220 may be a Subscriber Identity Module (SIM) card or a Universal Integrated Circuit Card (UICC) which, in addition to storing network specific information used to authenticate and identify the subscriber on the GSM communication system 104 (and/or other systems) to control access, also stores the NFC application elements. In this case, the interface 222 is a SIM or UICC interface. The UICC card is the name of the standardised platform that can run several telecom applications such as the USIM application for a 3G network, or the SIM application for a 2G network, or others. The UICC card was introduced with the release 99 of the 3GPP standards, and replaces the SIM platform (that has GSM capabilities only). The term UICC card will be used for the rest of the document to designate the Integrated Circuit Card (ICC) used in a mobile phone for the support of the telecom applications such as USIM, SIM, and ISIM.

Communication between the NFC unit 218 and the processing unit 200 may occur via a direct connection through a serial link, such as an ISO link between the UICC interface 222 and the processing unit 200, or via the NFC modulator/demodulator 212 that acts as a proxy.

When NFC unit 218 is a dedicated module that is incorporated into the mobile device 102, the module may be soldered on the main Printed Circuit Board (PCB) of the mobile device 102 or may be a removable module such as a memory card and will act as a dedicated secure memory coupled to the processing unit 200, for example via a ISO link or any other suitable connection (such as USB, I²C). The dedicated module may comprise, for example, an Integrated Circuit (IC) which is substantially the same as the IC used for contactless smartcard devices.

The NFC unit 218 may alternatively be a element in the mobile device 102 which emulates a UICC card or a memory card. For example, the NFC unit 218 may be an NFC unit element (not shown) which is part of the program memory 216.

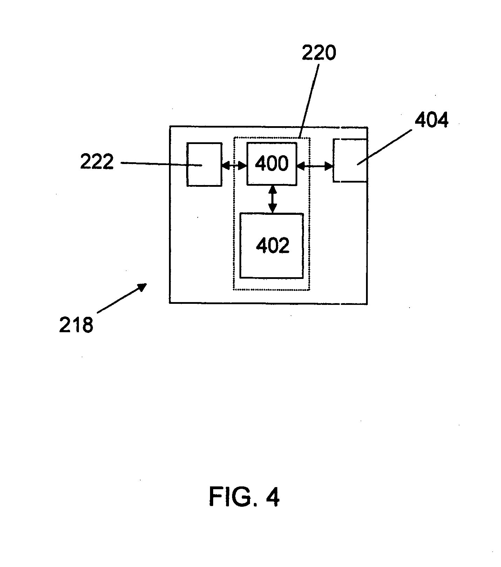

FIG. 4 shows a simplified schematic diagram of an example of a UICC implementation of a NFC unit 218 in accordance with an embodiment of the disclosure. The UICC NFC unit 218 comprises the UICC interface 222 for coupling to the processing unit 200, the UICC card 220 when coupled to the mobile device 102 and an interface 404 for coupling to the NFC modulator/demodulator or modem 212. In an example, interface 404 is a Host Controller Interface (HCI) interface which controls the communication of data according to a protocol standardised by ETSI (ETSI 102 622). The UICC card 220 typically comprises a processor 400 and memory 402. In the example shown in FIG. 2, the program memory 216 stores specific program elements for controlling the operation of the mobile device 102 by means of the processing unit 200 which include a user interface element 224, and a plurality of NFC managing elements (represented as group by 226 in FIG. 2). Each of the plurality of NFC managing elements is associated with at least one of the plurality of application elements stored in the NFC unit 218 for managing the at least one associated application element of the plurality of application elements. The user interface element 224 is for interfacing with at least some of the NFC managing elements, and for providing information to a user relating to the NFC services provided by the plurality of application elements associated with the at least some of the NFC managing elements. In operation, the user interface element 224 in response to user selection of a NFC service based on the user provided information is further arranged to activate the NFC managing element of the selected NFC service to manage the at least one associated application element. Each of the plurality of NFC managing elements is arranged to manage the at least one associated application element so as to control the at least one associated application element to provide a NFC service or to update a NFC service. A NFC service may be updated by adding a new application element to the NFC unit 218, by updating one or more parameters of the at least one associated application element and by removing the at least one associated application element stored in the NFC unit 218.

It will be appreciated that in addition to the user interface element 224, each of the NFC managing elements may have its own dedicated user interface which is independent from the user interface element 224 and dedicated user interfaces of other NFC managing elements. The dedicated user interface of a NFC managing element may be a regular application that is currently deployed on NFC devices and which provide logic to manage the NFC application elements in the NFC unit 218 as well as a user interface to trigger contactless transactions for the NFC application elements they manage.

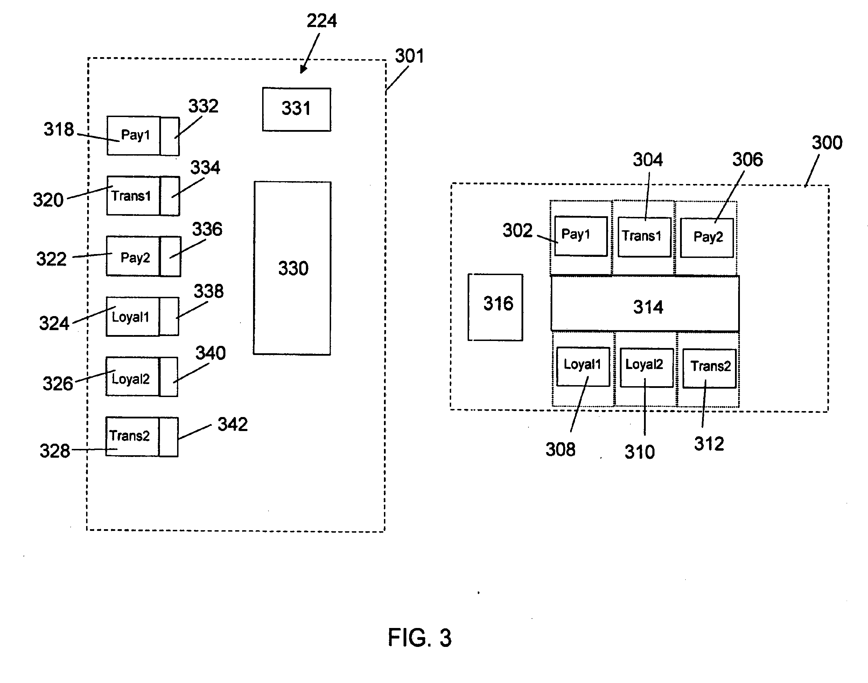

Referring now to FIG. 3 which illustrates schematically and in more detail the arrangement of the NFC application elements held in the NFC unit 218 and the elements 224, and 226 in accordance with an example of the disclosure.

Block 300 represents the secure operating environment of the NFC unit 218 and block 301 represents the operating environment of the main processor 200 and program memory 216. Block 300 shows a plurality of NFC application elements 302-312, and an operating system 314 of the NFC unit 218. In a UICC implementation, the NFC application elements 302-312 are stored in the memory 402 (shown in FIG. 4) and called by the processor 400. The operating system 314 may be stored in the memory 402 or memory that is part of the processor 400 or a separate memory. The dotted boxes around the NFC application elements 302-312 represent that the NFC application elements 302-312 are stand alone applications operating in isolation from other application elements. For instance, the operating system 314 may be based on the JavaCard specifications and may also implement the global platform standards that both define the process of isolation of the applications. It will however be appreciated that some or all of the NFC application elements stored in the NFC unit 218 may be designed to have some interoperability. For illustration purposes, the NFC application element 302 is associated with a first payment service (e.g. PayPass^{™} from MasterCard®), the NFC application element 304 is associated with a first transport service (e.g. train ticket), the NFC application element 306 is associated with a second payment service (e.g. VSDC^{™} from Visa®), the NFC application element 308 is associated with a first loyalty card (e.g. card to collect points for a particular book shop), the NFC application element 310 is associated with a second loyalty card (e.g. card to collect points for a particular airline), and the NFC application element 312 is associated with a second transport service (e.g. airline ticket). It is noted that an NFC service may have more than one NFC application element associated with it. For example, the NFC payment service from Mastercard® comprises two application elements: one is a Proximity Payment System Environment (PPSE) and the second one is the PayPass^{™} application. The PPSE application is used to retrieve the reference of the PayPass^{™} applications if several have been installed.

In order to manage the NFC application elements stored in the NFC unit 218 to provide the NFC services associated with the application elements, the program memory 216 stores a plurality of NFC managing application elements 318-328, with each one of the managing application elements 318-328 managing at least one of the NFC application elements 302-312 to provide the associated service or to update a NFC service. NFC managing application element 318 manages the first payment NFC application element 302, NFC managing application element 320 manages the first transport NFC application element 304, NFC managing application element 322 manages the second payment NFC application element 306, NFC managing application element 324 manages the first loyalty NFC application element 308, NFC managing application element 326 manages the second loyalty NFC application element 310, and NFC managing application element 328 manages the second transport NFC application element 312. In some cases, a NFC managing application element may manage more than one NFC application element. For example, a NFC managing application element may manage two or more NFC application elements which are associated with the same service provider and/or the same NFC service.

Typically, each of the NFC managing application elements 318-328 are linked to the at least one associated application element 302-312 via a proprietary link determined by the application element provider.

In an example, the program memory 216 further comprises a plurality of Application Program Interfaces (API) 332-342, with each one of the plurality of APIs 332-342 being associated with a respective one of the plurality of NFC managing elements 318-328. The APIs provide an interface between the respective NFC managing element 318-328 and the user interface element 224. The user interface element 224 is arranged to activate a NFC managing element 318-328 to initiate the NFC service or to update a NFC service or to retrieve information relating to the at least one associated application element through the respective API 332-342.

The user interface element 224 includes a registration element 331 for registering and un-registering a NFC managing element 318-328 associated with at least one application element. The registration element 331 acts as an API and may also send request to the NFC managing elements 318-328. The user interface element is arranged to interface with registered NFC managing elements 318-328 such that once a NFC managing element is registered, the user interface element 224 can interface with the NFC managing element and invoke or trigger NFC services or updates of the application elements or retrieval of information relating to the at least one associated application element.

In an embodiment, the registration element 331 may only register NFC managing elements having an API (such as one of the APIs 332-342) which provides an interface between the respective NFC managing element 318-328 and the user interface element 224. During registration, the NFC managing element provides an entry point to the associated API 332-342 for later invocation.

The user interface element 224 also includes a user interface engine 330 for providing information relating to the NFC services provided by the NFC application elements 302-312 to a user via the MMI 214. The information presented to the user may include a list of the NFC services which may be provided by the NFC application elements 302-312. Using the examples given above for the NFC application elements 302-312, the list may include PayPass^{™} payment card, VSDC^{™} payment card, train ticket, airline ticket, book shop loyalty card, airline loyalty card. The user interface element 224 therefore enables the user to select one of the NFC services or NFC application elements 302-312 from information provided to the user via the MMI 214 and once selected, the user interface element 224 manages the selected NFC application element via the respective managing application element to provide the selected service or to update a NFC service. Managing the selected NFC application by the user interface element 224 includes selecting and executing the managing application element which corresponds to the selected NFC application element and the selected managing application element then controls the respective NFC application element and its behaviour during the provision of the associated service. Updating a NFC service may include deleting, updating, installing an application element in the NFC unit 218, and/or deleting, updating, installing an NFC managing element in the program memory 216. The user interface element 224 is updated accordingly.

The information provided to the user by the user interface element 224 which relates to the NFC services associated with the NFC application elements 302-312 stored in the NFC unit 218 (e.g. information which describes the available NFC services) may be provided to the user interface element 224 when the NFC application elements are stored in the NFC unit 218, for example when the NFC application elements are loaded and installed or personalised in the NFC unit 218.

In an example, the user interface element 224 may group the NFC services according to the type of available NFC service. For example, the user may be presented with a list of the available payment cards, a list of the available loyalty cards and/or a list of the available transport tickets. The information provided to the user may be in the form of graphical representations or other identifier for each of the NFC services e.g. a logo or brand image or jingle or animation etc. for each NFC service. The user interface element 224 may in addition provide some options to the user(e.g. via menus on the display of the mobile device 102) such as managing a lock code for a particular NFC application element or selecting payment card options such as the default card to be used during a contactless transaction. The lock code is known as the Contactless Application Lock Code (CALC) and if used, may be provided to the NFC unit 218 when the NFC application element is stored in the NFC unit 218. Managing the CALC may include verifying, changing, or activating/deactivating the CALC.

The user interface element 224 can be a native application such as a proprietary application or a Java based application.

By means of the registration element 331, the NFC managing elements may interface with the user interface element 224 as follows (in other words, the NFC managing elements may call the following interfaces):
getInstance: with this static interface, the user interface element 224 returns the instance of the registration element 331 to the caller NFC managing element. This instance is used by the NFC managing element for the invocation of the addManaging and removeManaging interfaces..
addManaging element: the user interface element 224 registers the caller NFC managing element. The NFC managing element willing to register provides as a parameter the APIs 332-342 with which it is associated.
removeManaging element: the user interface element 224 un-registers the caller NFC managing element.
notifyForChanges: the user interface element 224 is notified of changes occurring in the caller NFC managing element. The NFC managing element should have registered previously with the addManaging interface for this interface to be valid. Changes might be in the NFC managing element itself or in the NFC application elements in the NFC unit 218 associated with the NFC managing element. For example, changes might include updates, deletions, or even modifications of properties and may include changes made Over-The-Air (OTA).

It will be appreciated that the above list of interfaces is not exhaustive and other interfaces can be included if needed.

In the user interface element 224, the user interface engine 330 can retrieve the list of the NFC managing elements that have been registered by the registration element 331. Once a NFC managing element is registered with the user interface element 224, the APIs 332-342 of the NFC managing elements 318-328, the user interface engine 330 and the registration element 331, may offer a set of services as follows:
getType: a NFC managing element returns to the user interface element 224 its type among, for example, PAYMENT, TICKETING, TRANSPORT, ACCESS, UNKNOWN. It is possible for a NFC managing element to mix different types and thus, the type the API returns may be a combination of types described above.
listCardAID: a NFC managing element returns to the user interface element 224 a list of Application Identifiers (AIDs) of the application elements (which in an example and as will be described in the following may be referred to as card application elements) it manages. An AID is unique and assigned to one card application element. The list only contains the AIDs of the card application elements which are activated and available for a contactless transaction. The NFC managing element keeps this list up to date according to the state of its card application element(s). If a new card application element is loaded or installed and activated, its AID is added to that list. On the other hand, if some card application elements have been uninstalled or deactivated their AIDs are removed from that list.
selectCardAndProcess: the user interface element 224 informs a NFC managing element to start a NFC service, such as a contactless transaction, with a given card application element. In an example, the card application element may be identified with its AID. The NFC managing element is responsible for the selection of that card application element among the different card application elements it handles and for the complete handling of the contactless transaction as follows:
   Initialize the NFC hardware and software to proceed with a contactless transaction.
   Activate the application element so that the contactless transaction may proceed.
   Ensure the successful progress of the contactless transaction.
   Detect the end of the contactless transaction if any.
   Inform the user of the progress and status of the contactless transaction.
   Complete the end of the transaction by releasing the
   NFC hardware and software resources.
getCardName: a NFC managing element returns to the user interface element 224 the name of a card application element (identified with its AID for example). This name may be a string the user interface element 224 can use for display to the user.
setCardName: the user interface element 224 calls this API to set or change the name of a card application element in a NFC managing element (identified with its AID for instance). This name may be a string the user can set/change through a user interface engine 300 of the user interface element 224.
getCardInfo: the user interface element 224 instructs a NFC managing element to display information on a given card application element. The NFC managing element is responsible for the complete handling of that display.
getCardIcon: the NFC managing element returns an icon for a given card application element to the user interface element 224. The user interface element 224 may use the icon when displaying a list of card application elements and other intermediate popup when representing the card application element to the user.
deleteCard: the user interface element 224 informs a NFC managing element to proceed with the removal of a card application element from the NFC managing element. The NFC managing element is responsible for the deletion of the card application element in the secure element. After a successful card application element deletion, the user interface element 224 updates its card list accordingly. The card application element cannot be further selected by the user interface element 224.
updateCard: the user interface element 224 informs a NFC managing element to update the content of a given card application element. During the card update process, the user interface element 224 may be put on standby and the NFC managing element is responsible for the complete process of the card update. The NFC managing element may offer the user an option for stopping the card update. After a successful card update, the NFC managing element and user interface element 224 are updated accordingly.
installCard: the user interface element 224 informs a NFC managing element to check for some new card application elements available for installation. During the card installation process, the user interface element 224 may be put on standby and the NFC managing element is responsible for the complete processing of the card installation. The NFC managing element may offer the user an option for stopping the card installation. After a successful card installation, the NFC managing element and the user interface element 224 are updated accordingly. New card application elements installed are registered with the registration element 331 and can be selected by the user interface element 224 to proceed with a contactless transaction.
deleteManaging element: the user interface element 224 informs a NFC managing element to delete itself. The NFC managing element has to delete all the card application elements it handles prior to deleting itself. During the deletion process, the user interface element 224 may be put on standby and the NFC managing element is responsible for the complete processing of the deletion. When the deletion of the NFC managing element ends, the user interface element 224 is updated accordingly.
updateManaging element: the user interface element 224 informs a NFC managing element to update its content, such as the application element(s) associated with the NFC managing element. During the NFC managing element update process, the user interface element 224 may be put on standby and the NFC managing element is responsible for the complete process of the update. The NFC managing element may offer the user an option for stopping the update. When the card update ends, successfully or not, the user interface element 224 is updated accordingly.

In the above, the user interface element 224 informs a NFC managing element in response, for example, to user selection via a display of the mobile device 102.

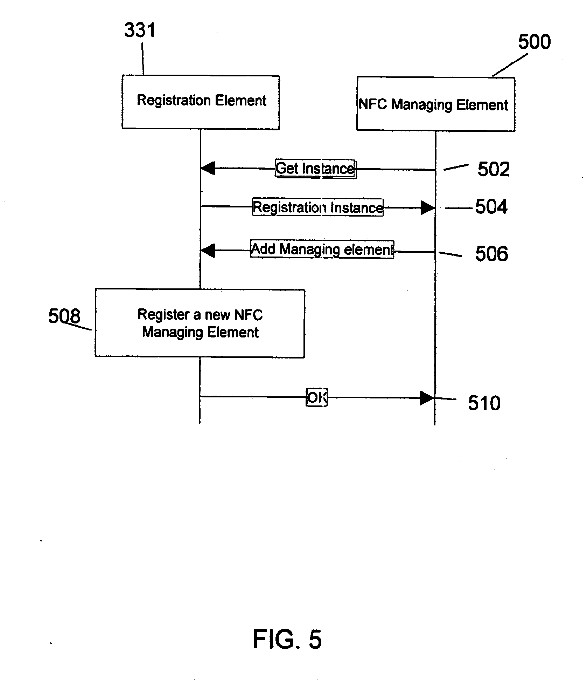

A NFC managing element registers with the user interface element 224 through the registration element 331 and its respective API. FIG. 5 illustrates an example of the process flow for when a NFC managing element 500 registers with the user interface element 224. After being loaded and installed in the program memory 216 of the mobile device 102, the NFC managing element 500 invokes the registration element 331. The NFC managing element 500 connects to the registration element 331 to get the registration element's 331 singleton reference, step 502.

For software programming languages that are object based, such as Java, APIs are invoked on instances of objects. That means one instance of an object is needed before APIs can be invoked on it. Getting an instance of an object means getting a reference to an object the system created or allocated in memory. Instances of an object do not communicate together, thus between different instances of an object there is no control on the resources the instances hold (data is managed per instances). One workaround is to avoid allocating one instance of an object each time you need to invoke APIs on it. A common design pattern to do so is the singleton design pattern: having one static API (that means a global API that is common for all the instances of an object) that returns the reference to a single instance of this object. This should have been previously allocated, if not a new instance is created and stored and is returned each time this static API is called. This design pattern ensures only one single instance of an object is used by the overall system to control the resources the object holds. This saves memory space too. In an embodiment described herein, the registration element 331 implements this design pattern. There is therefore only one single instance of this object in memory. The instance is retrieved with the getInstance static API described previously.

Then the NFC managing element 500 registers by invoking the addManaging element service of the registration element 331 (step 506), and providing a handler to the associated API (for example, one of 332-342) it implements. The registration element 331 adds the new handler of the NFC managing element 500 to its registry, step 508, and sends back a no error status, step 510. To un-register a NFC managing element, substantially the same flow is followed but instead the removeManaging element service of the registration element 331 is invoked instead of the addManaging element and the NFC managing element does not provide a handler to the API it implements.

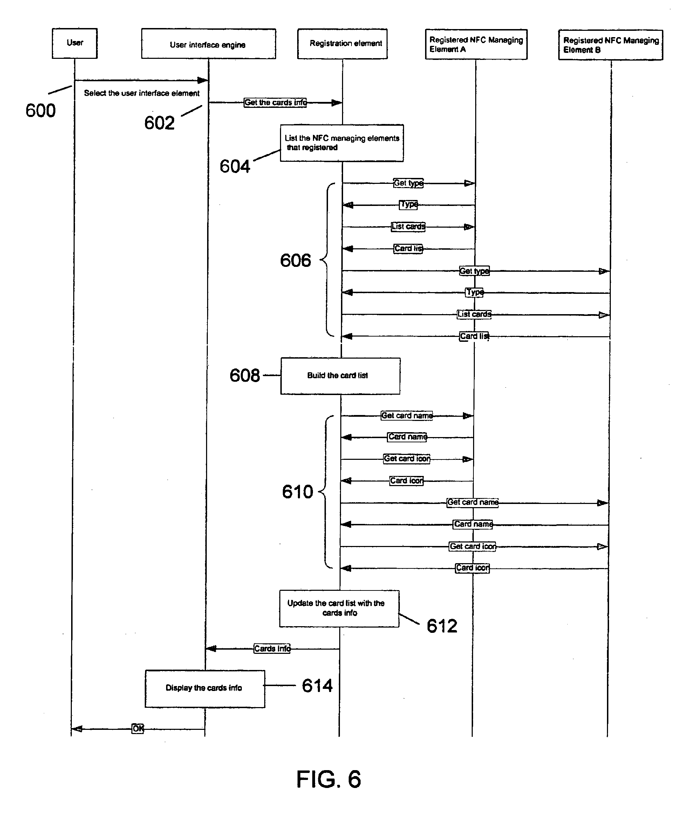

FIG. 6 illustrates interactions that may occur between the user interface engine 330 and registration element 331 of the user interface element 224 and two NFC managing elements, A and B, that have been registered with the registration element 331, in an example when the user interface element 224 gathers information on the different application elements (which in this example are card application elements) which are managed by the NFC managing elements A and B.

First, the user selects the user interface element 224 from the user interface of the mobile device 102, step 600. The user interface element 224 starts and invokes the getCardsInfo service of the user interface engine 330, step 602. The registration element 331 retrieves the list of the NFC managing elements that have been registered, which list will include NFC managing element A and NFC managing element B, step 604. For both NFC managing elements A and B, the registration element 331 gets the NFC managing element type (using the getType service) and the card application element list (using the listCardAID service). As a response, each of the NFC managing elements A and B via their respective APIs (which may, for example, be two of the APIs 332-342) returns the complete list of the AIDs of the card application elements which are supported, steps 606. The user interface element 224 builds a list of the card application elements using all the AIDs of the card application elements received from the NFC managing elements A and B, step 608.

In order to gather uniform and standardised information for display for all the card application elements, the registration element 331 invokes the getCardName and getCardIcon services on the APIs of NFC managing element A and NFC managing element B. As a response, each of the NFC managing elements A and B provides the name and icon of its card application elements, steps 610. The registration element 331 updates its list of card application elements from the information provided accordingly, step 612, and provides the list of card application elements to the user interface engine 330 for display to the user, 614. The user interface element 224 is then able to display the NFC managing element and card application element information per type of service, such as payment, ticketing, transport, access, etc.

The procedure described in FIG.6 may also occur if a NFC managing element A or B invokes the notifyForChanges service of the registration element 331. In the case when the NFC managing element A invokes this service, the registration element 331 may only invoke the services for the NFC managing element A in the steps 606 and 610 to refresh the content of the card application element information accordingly.

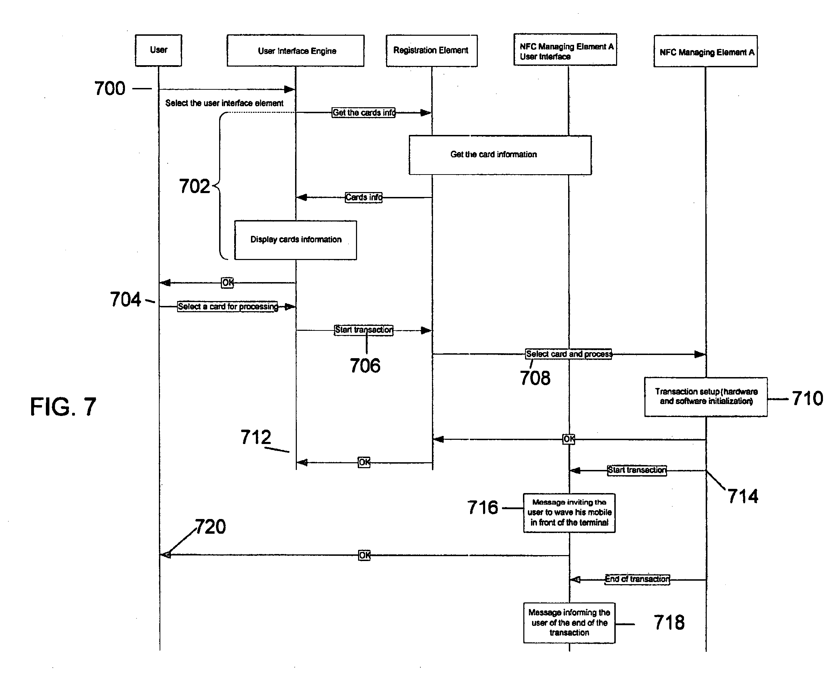

FIG. 7 illustrates interactions that may occur between the user interface element 224 and an NFC managing element A, that has been registered with the registration element 331, in an example when the user selects a card application element to proceed with a contactless transaction.

First, the user selects the user interface element 224 from the user interface of the mobile device 102, step 700. As a response, the user interface element 224 displays on a display of the mobile device 102 the list of the type of NFC services available to the user: payment, ticketing, loyalty etc. After the user selects one of the types of service he wants to use, the card application elements available are displayed by the user interface element 224 on the display of the mobile device 102, steps 702.

The user selects a card application element to proceed with the contactless transaction, step 704. In response to user selection of a card application element, the user interface engine 330 forwards a start transaction event to the registration element 331, step 706. As the selected card application element belongs to the NFC managing element A, the registration element 331 notifies the NFC managing element by invoking the selectCardAndProcess service, step 708. The NFC managing element A initialises itself, and activates the card application element and the NFC hardware (such as the NFC communication section 204), step 710. When the NFC managing element A is ready to proceed with the contactless transaction, the user interface element 224 is put on standby, step 712 and a user interface of the NFC managing element A is activated (step 714). The activated user interface notifies the user that the selection of the card application element has been successful. For example, it may display a message on the display of the mobile device 102 inviting the user to wave his mobile device in front of a reader terminal, step 716. At the end of the transaction, the user interface of the NFC managing element A displays an end of transaction notification message, such as timeout expiration, successful, step 718. At this time, the NFC managing element A exits and the user interface element 224 restarts, 720.

Thus, in response to the user's selection, the user interface element 224 activates the NFC managing element A and the NFC managing element A proceeds with the NFC service as described above or may alternatively proceed to update a NFC service.

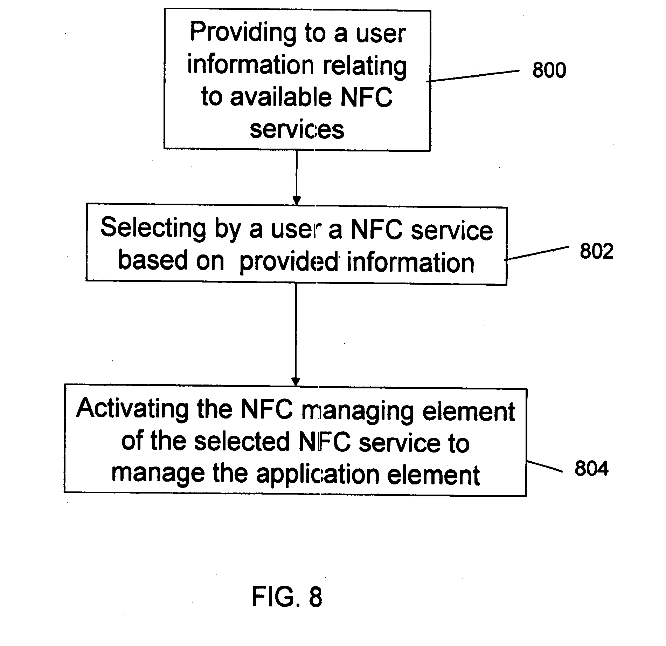

The following is another example illustrating a method for providing a NFC service by a mobile device in accordance with the disclosure. In the following example, the NFC service is a contactless payment service and reference is also made to FIG. 8.

The user first launches the user interface element 224 on the mobile device 102 by selecting its menu item or pressing the corresponding soft/smart key. The user interface element 224 provides information to the user, for example via the display of the mobile device 102, relating to the NFC services available (for example those NFC services provided by the plurality of application elements associated with the registered NFC managing elements), step 800. The provided information may include a list of the contactless payment services available on the mobile device 102. The user selects one of the listed contactless payment services. A list of the payment card application elements available for payment appears on the display of the mobile device 102. The user selects the payment card he wants to pay with from the list the user interface element 224 displays, step 802. Once the user has selected a payment card, the user interface element 224 triggers or activates the corresponding NFC managing element to manage the corresponding card application element, step 804. If the NFC managing element accepts the payment request, the user interface element 224 stops and may be put on standby. The NFC managing element proceeds with the contactless payment transaction and leads the user through the transaction by displaying information on the display of the mobile device 102.

The payment transaction sequence and information displayed on the display of the mobile device 102 will depend on the capabilities of the NFC managing element. For instance, the NFC managing element may ask the user to enter a pass-code for authentication or not. After the successful verification of the pass-code, it may ask the user to wave the mobile device 102 in front of the payment terminal. Then, it can notify the user once the transaction is successfully completed. At this time, the NFC managing element ends and the user interface element 224 restarts displaying the list of the payment card application elements.

In an example shown in FIG. 3, a database element 316 is stored in the NFC unit 218 for storing summary information for the NFC application elements 302-312 stored in the NFC unit 218. In an example, the database element may be an NFC application element. The summary information may include at least one parameter of each of the NFC application elements 302-312 such as a graphical representation (e.g. a logo, animation or other brand image) or other identifier of the NFC service associated with the NFC application element (such as a jingle or the Application Identifier (AID)). The summary information may also or instead include personalised information or parameters for one or more NFC application elements in accordance with details of the user. For example, in the case of a payment application element, the personalised information may include the personal account number, cryptographic keys, or CALC. The summary information may also or instead include a list of the NFC services associated with the NFC application elements 302-312 stored in the NFC unit 218, a list of the NFC application elements 302-312 and/or a list of the available NFC services grouped according to the type of NFC service. For example, the summary information may include a list of the different NFC services such as payment, transport, ticketing or others the NFC unit 218 offers, and/or a list of the available payment cards, a list of the available loyalty cards and/or a list of the available transport tickets.

The information provided to the user by the user interface element 224 may be obtained from the summary information stored in the database element 316. In an example, the user interface element 224 interfaces with the database element 316 through APDU commands which are defined according to the format defined in ISO 14443-4 or ISO 7816-4.

The database element 316 is a stand alone application that does not interface or share data with other NFC application elements stored in the NFC unit 218. The summary information may be provided to the database element 316 (as with the user interface element 224) when the NFC application elements are stored in the NFC unit 218, for example when the NFC application elements are loaded and installed or personalised in the NFC unit 218.

The database element 316 may interface with the user interface element 224 to provide at least some or all of the following services and APDU commands:
Commands to set/get the Application Identifier (AID) of the different NFC application elements 302-312 stored in the NFC unit 218. AID is the standardised way to identify applications in a smart card according to the ISO 7816 and Global Platform standards. The AID may be listed per service, use case or activity, such as payment, transport, ticketing, loyalty, etc. The set/get commands can, for example, retrieve the list of the different NFC application elements for payment;
Command to set/get the default AID of a NFC application element when further NFC application elements are related to the same use case or activity such as in the case where there are multi-card payment application elements; and
Commands to manage a pool of Contactless Application Lock Codes (CALC) or similar security codes for the NFC application elements. These commands allow verifying / changing / activating / deactivating / unblocking the security codes.

Some payment application elements do not support the CALC feature by default. For these elements, in order that the user interface element 224 running in the mobile device can offer the user a security code or CALC service, the database element 316 can be used to offer the user interface element 224 the possibility to support the CALC/security code feature on behalf of the payment application elements without having to modify the payment application element. Thus, the user interface element 224 is responsible for the implementation of the CALC user interface and for the CALC APDU command exchange with the database element 316.

As mobile phones accumulate new applications and become more advanced, Over-The-Air configuration has been used increasingly for distribution of new software updates to mobile phones or provisioning mobile phones with the necessary settings with which to access new services such as WAP or MMS. The updates may include software updates from phone manufacturers or network operators or other third parties to software held in the mobile phone. Typically, mobile phones are updated OTA via data packets sent to the RF sections of the mobile phones from OTA servers which messages can provide remote control of mobile phones for service and subscription activation, personalisation and programming of a new service for mobile network operators and telecom third parties.

In an example of an embodiment of the disclosure, the updates may also include update information for one or more of the NFC services associated with the NFC application elements 302-312 stored in the NFC unit 218. The update information may include instructions to add a new NFC application element to the NFC unit 218, instructions to update one or more parameters of a NFC application element stored in the NFC unit 218 and/or instructions to remove one or more NFC application elements stored in the NFC unit 218. The instructions to update one or more parameters may include personalisation information to update one or more parameters of a NFC application element in accordance with details of the user. For example, in the case of a payment application element, the personalisation information may include information to set the personal account number, cryptographic keys, CALC or branding information for the end user. In the case of a payment card application element, the instructions to update one or more parameters may include instructions sent by the issuing bank to update the payment card expiration date, to change a security code, to set the credit card number, to set the security checks to be performed by the backend system during a payment transaction, to set the maximum amount for a payment transaction etc.. The update information may additionally or alternatively include data or transaction information for the NFC service, such as payment details.

The parameters, including the personalisation information, may be stored in the memory 402 of the NFC unit 218 or a separate memory (not shown) of the NFC unit 218 or for example in the case of branding information may be stored in the mobile device 102. By storing the parameters in the NFC unit 218, when the NFC unit 218 is a removable module, the different NFC services and NFC application elements, as well as certain parameters (such as branding information, CALC information, default NFC application element, etc), are stored on the removable NFC unit 218 and are available to the user even when the NFC unit 218 is removed from one mobile device and inserted into another mobile device having NFC capability.

In the arrangement 100 shown in FIG. 1, an OTA server 112 provides updates to the mobile device 102 via the GSM communication system 104. Although one OTA server 112 is shown, there may be more than one OTA server with each OTA server providing different updates. In an example in accordance with an embodiment of the disclosure, the update information provided by the OTA server 112 include updates to NFC application elements held in the mobile device 102. The OTA server 112 may be part of the GSM network operator or may be separate.

In the case of updates to a NFC service, in the example shown in FIG. 1 update information for a NFC service are held by a NFC service provider server 114 and sent to the OTA server 112 for transmission to the mobile device 102. Only one NFC service provider server 114 is shown in FIG. 1. It will however be appreciated that there may be more than one NFC service provider server 114 associated with the same or different service provider. The NFC service provider servers may be controlled and managed directly by the service provider e.g. a bank or airline, or by a third party managing the NFC service updates for a service provider. Although not shown in the example shown in FIG. 1, the update information for the NFC application elements may be sent by the OTA server 112 under the control of a Certification Authority (not shown) in order to enhance the security of the update process. The Certification Authority (not shown) manages the security of the data exchange through mutual authentication or data ciphering and signing based on cryptographic keys the servers share with the NFC unit 218. The Certification Authority may be part of the OTA server or separate. The OTA server 114 is thus able to load, install, update and personalise NFC application elements in the NFC unit 218.

The update may be triggered by the user or the OTA server.

The update information sent from the OTA server 112 is received at the RF communication section 202 of the mobile device 102 and at the processing unit 200 and transferred to the NFC unit 218 to update the NFC unit 218 under the control of the processing unit 200. The OTA server 112 can thus dynamically update and manage the content of the NFC unit 218 OTA. It can remove, add or update the NFC application elements 302-312 or their parameters in the NFC unit 218.

If the managing application elements 318-328 associated with the new or updated NFC application elements are already stored on the mobile device 102, the managing application elements may receive a notification telling them their parameters have been updated or new applications have been installed as is described in more detail below. After receiving the notification, the managing application element fetches the update from the NFC unit 218. If the managing application element is not stored on the mobile device 102, or is not able to handle the new loaded and installed NFC application elements in the secure element, an update of this managing application element can also be done OTA.

Since the user interface element 224 provides to the user information relating to the available NFC services, the user interface element 224 needs to be notified accordingly to take these changes into account so that it can update the information displayed to the user to provide the user an updated list of the available NFC services and NFC application elements that are present in the NFC unit 218 after an OTA update. The default NFC application element, the branding information, the CALC information may have changed too. Thus, the processing unit is further arranged to update the information provided to the user by the user interface element 224 according to the received update information transferred to the NFC unit 218. In a mobile device having a database element 316, the database element 316 is updated when the received update information is transferred to the NFC unit and the information presented to the user may be updated from the updated information in the database element 316.

The Applicant's application (CS35357) filed on the same date as this application and entitled 'Wireless Communication Device for providing at least one Near Field Communication Service' provides more details as to how a NFC enabled mobile device may be updated OTA. The disclosure of that application is incorporated herein by reference.

It will be appreciated that the user interface element in accordance with examples described above enables a plurality of NFC managing elements installed on an NFC enabled mobile device to be registered dynamically. Each time a new NFC managing element and its associated application element is installed on the mobile device, the user interface element provides the possibility to register the NFC managing element with the user interface element. On the other hand, when an application element is removed from the mobile device, the user interface element facilitates the un-registering of the associated NFC managing element from the user interface element.

In addition, the user interface element in accordance with the examples described above provides the user the possibility to update (install, add, update and uninstall) the NFC managing elements and the associated application elements. The user may also have the possibility to install new card application elements in a NFC managing element. The user may also uninstall / update NFC managing elements already installed as well as their content (for example, update or delete card application elements). When a NFC managing element has been registered with the user interface element 224, the user can select to uninstall or update it or its content. The user interface element triggers the NFC managing element but does not proceed with the update itself. The NFC managing element is responsible for the successful execution of the required action.

The user interface element in accordance with the examples described above may also provide a service for installing new NFC managing elements and/or new application elements by downloading them OTA. After a successful loading the NFC managing elements may be automatically registered to the user interface element.

The user interface element in accordance with the examples described above defines a unique user interface for accessing the NFC services. The interface is application provider independent. It offers the same level of services for all the NFC managing elements that are registered. Only one menu entry and one soft key may be needed to launch the user interface element whatever the number of NFC managing elements have been installed on the mobile device. The means of accessing the user interface element may be further customized depending on the mobile device which allows better ergonomics.

The user interface element in accordance with the examples described above provides a standardised format for the list of card application elements for display to the user for card selection which is more user friendly than having lots of different formats from different providers. The NFC managing elements provide information on the card application elements they manage in a standardized manner. Thus, the user interface element displays uniform card list information to the user for selection, such as card name, card icon, etc.

The user interface element in accordance with the examples described above provide the user with a list of card application elements available for payment, ticketing, transport, access, loyalty etc. Each NFC managing element that is registered to the user interface element provides its list of card application elements. A NFC managing element manages dynamically its card list. When a card application element is added or removed, the NFC managing element updates its list accordingly. The user interface element simply gathers the card lists of the different NFC managing elements that are registered.

The user interface element in accordance with the examples described above activates or triggers a NFC managing element after the user selected a NFC service associated with the NFC managing element and lets the NFC managing element proceed with the contactless transaction or update the selected NFC service. The NFC managing element is responsible for the initialization (hardware and software), execution and end of transaction detection, has the control of the contactless transaction and has to inform the user of the progress of the contactless transaction. The user interface element execution stops once the NFC managing element is ready to start the transaction and restarts executing when the NFC managing element flow ends e.g. when the NFC managing element notifies the user of the end of the contactless transaction. On re-start, the user interface element may offer the user to proceed with another NFC service.

By collecting information relating to the plurality of NFC services that can be provided by the phone and being arranged to initiate or activate a NFC service in response to user input, the user interface element in accordance with the disclosure may act as a single entry point for accessing and activating the different NFC services on a mobile device that is independent of the different application element providers. The user interface element in accordance with the disclosure thus provides an user friendly mechanism to support a plurality of application elements including those of the same type from different providers (e.g. contactless card application elements from different providers). The user interface element enables information for the different application elements to be collected and presented to the user in a simple user friendly manner, for example, by a central menu which lists the different types of available NFC services, and enables the user to select and initiate a NFC service out of a plurality of NFC services via the information presented to the user which selected NFC service is then provided by the NFC managing element of the selected NFC service managing the appropriate application element(s). Thus, for example, in the case when a user's mobile device has a plurality of NFC payment application elements from different providers stored in the NFC unit, a user via a single press of a button may select a NFC payment service (e.g. a default contactless payment card application element) without having to look through all the different application elements stored in the NFC unit to find and select a NFC payment application element.

The solution provided by user interface element in accordance with the disclosure provides a common platform across the different application elements stored in the mobile device which is independent of the application element providers. Thus, the issues with handling legacy (i.e. existing) application elements, such as PayPass^{™} NFC application element from MasterCard®, Visa Smart Debit Credit^{™} (VSDC) NFC application element from Visa® or ExpressPay^{™} NFC application element from American Express® are avoided.

The user interface element in accordance with the disclosure can dynamically manage NFC application elements so as to trigger a NFC service, or update the NFC services provided by the mobile device. The updating of the NFC services may include installing a new NFC service by adding a new application element, updating an existing NFC service by updating one or more parameters of an existing application element or removing a NFC service by removing an application element.

In devices having the database element, the database element can support the dynamic storage of summary information for the NFC application elements stored in the NFC unit, such as a list of the NFC services, a list of the application elements and their properties which summary information can be dynamically updated when the NFC services are updated OTA.

In the foregoing description, the invention has been described with reference to specific examples of embodiments of the invention. It will, however, be evident that various modifications and changes may be made therein without departing from the broader scope of the invention as set forth in the appended claims.

## Claims

1. A wireless communication device (102) for providing at least one Near Field Communication service to a user, the wireless communication device (102) comprising:
a processing unit (200) for carrying out operational processing for the wireless communication device (102);
a Near Field Communication unit (218) for storing securely a plurality of application elements (302-312) for use in providing a plurality of Near Field Communication services, the Near Field Communication unit (218) being communicably coupled to the processing unit (200);
a program memory (216);
a plurality of Near Field Communication managing elements (226, 318-328) stored in the program memory (216), each of the plurality of Near Field Communication managing elements (318-328) being associated with at least one of the plurality of application elements (302-312) stored in the Near Field Communication unit (218) for managing the at least one associated application element of the plurality of application elements so as to control the at least one associated application element to provide a Near Field Communication service or to update a Near Field Communication service; and
a user interface element (224) stored in the program memory (216), the user interface element (224) including a registration element (331) for registering at least one of the plurality of Near Field Communication managing elements associated with at least one of the plurality of application elements, the user interface element (224) for interfacing with registered Near Field Communication managing elements, and for providing information to a user relating to the Near Field Communication services provided by the plurality of application elements (302-312) associated with the registered Near Field Communication managing elements, wherein in operation the user interface element (224) in response to user selection of a Near Field Communication service based on the user provided information is further arranged to activate the Near Field Communication managing element of the selected Near Field Communication service to manage the at least one associated application element,
wherein the user interface element (224) is arranged to receive information relating to the registered Near Field Communication managing elements and the plurality of application elements associated with the registered Near Field Communication managing elements, to process the received information so as to provide processed information relating to the plurality of available Near Field Communication services and to provide the processed information to the user.

2. The wireless communication device of claim 1, wherein each of the plurality of Near Field Communication managing elements (226, 318-328) is arranged to update a Near Field Communication service by adding a new application element to the Near Field Communication unit (218), by updating one or more parameters of the at least one associated application element and by removing the at least one associated application element stored in the Near Field Communication unit (218).

3. The wireless communication device of claim 1 or 2, wherein each of the plurality of Near Field Communication services associated with the stored plurality of application elements (302-312) is related to a type of Near Field Communication service and wherein the user interface element (224) is arranged to process the received information by sorting the plurality of Near Field Communication services according to the type such that the processed information provided to the user includes a list of the different types of the plurality of Near Field Communication services.

4. The wireless communication device of claim 3, wherein the processed information provided to the user further includes for each type of Near Field Communication service, a list of the Near Field Communication services of that type.

5. The wireless communication device according to any preceding claim, wherein the Near Field Communication unit (218) is further arranged to store a database element (316) for storing summary information for the plurality of application elements (302-312).

6. The wireless communication device according to claim 5, wherein the summary information includes at least one of:
a list of the plurality of Near Field Communication services associated with the stored plurality of application elements (302-312);
a list of different types of Near Field Communication services provided by the plurality of Near Field Communication services; and
at least one parameter of each of the plurality of application elements (302-312), the at least one parameter of an application element including one of the following: a graphical representation of the application element, an identifier of the application element, and a lock code for the application element.

7. The wireless communication device according to any preceding claim, further comprises a plurality of Application Program Interfaces (332-342), each one of the plurality of Application Program Interfaces (332-342) being associated with a respective one of the plurality of Near Field Communication managing elements (318-328) and for providing an interface between the respective Near Field Communication managing element and the user interface element (224), wherein the user interface element (224) is arranged to activate a Near Field Communication managing element to initiate a Near Field Communication service or to update the at least one associated application element or to retrieve information relating to the at least one associated application element through the respective Application Program Interface (332-342).

8. The wireless communication device according to any preceding claim, wherein the user interface element (224) is arranged to receive information relating to the registered Near Field Communication managing elements and the plurality of application elements associated with the registered Near Field Communication managing elements when the application elements are loaded and installed or updated or personalised in the Near Filed Communication unit (218).

9. The wireless communication device according to any preceding claim, wherein the user interface element (224) is arranged to process the received information so as to provide processed information relating to the plurality of available Near Field Communication services in an uniform format.

10. A method of providing a Near Field Communication service by a wireless communication device (102), the wireless communication device (102) having a processing unit (200) for carrying out operational processing for the wireless communication device (102), a Near Field Communication unit (218) for storing securely a plurality of application elements (302-312) for use in providing a plurality of Near Field Communication services, a program memory (216), a plurality of Near Field Communication managing elements (226, 318-328) stored in the program memory (216), each of the plurality of Near Field Communication managing elements (318-328) being associated with at least one of the plurality of application elements (302-312) stored in the Near Field Communication unit (218) for managing the at least one associated application element of the plurality of application elements so as to control the at least one associated application element to provide a Near Field Communication service or to update a Near Field Communication service, and a user interface element(224) stored in the program memory (216), the user interface element (224) including a registration element (331) for registering at least one of the plurality of Near Field Communication managing elements associated with at least one of the plurality of application elements, the user interface element (224) for interfacing with registered Near Field Communication managing elements, the method comprising:
providing by the user interface element (224) information to a user relating to the Near Field Communication services provided by the plurality of application elements associated with the registered Near Field Communication managing elements, wherein providing includes receiving by the user interface element (224) information relating to the registered Near Field Communication managing elements and the plurality of application elements associated with the registered Near Field Communication managing elements, processing the received information so as to provide processed information relating to the plurality of available Near Field Communication services and providing the processed information to the user;
selecting by a user a Near Field Communication service based on the user provided information; and
activating by the user interface element (224) the Near Field Communication managing element of the selected Near Field Communication service to manage the at least one associated application element.

11. The method according to claim 10, wherein information relating to the registered Near Field Communication managing elements and the plurality of application elements associated with the registered Near Field Communication managing elements is received by the user interface element (224) when the application elements are loaded and installed or updated or personalised in the Near Filed Communication unit (218).

12. The method according to claim 10 or 11, wherein processing includes processing the received information so as to provide processed information relating to the plurality of available Near Field Communication services in an uniform format.

## Patentansprüche

1. Drahtlose Kommunikationsvorrichtung (102) zur Bereitstellung von mindestens einem Nahfeldkommunikationsdienst für einen Anwender, wobei die drahtlose Kommunikationsvorrichtung (102) folgendes umfasst:
eine Verarbeitungseinheit (200) zur Durchführung einer operativen Verarbeitung für die drahtlose Kommunikationsvorrichtung (102);
eine Nahfeldkommunikationseinheit (218) zum sicheren Speichern einer Vielzahl von Anwendungselementen (302-312) zur Verwendung bei der Bereitstellung einer Vielzahl von Nahfeldkommunikationsdiensten, wobei die Nahfeldkommunikationseinheit (218) mittelbar mit der Verarbeitungseinheit (200) verbunden ist;
einen Programmspeicher (216);
eine Vielzahl von Nahfeldkommunikations-Verwaltungselementen (226, 318-328), die in dem Programmspeicher (216) gespeichert sind, wobei jedes der Vielzahl von Nahfeldkommunikations-Verwaltungselementen (318-328) mindestens einem der Vielzahl von in der Nahfeldkommunikationseinheit (218) gespeicherten Anwendungselementen (302-312) zur Verwaltung des mindestens einen zugehörigen Anwendungselements aus der Vielzahl von Anwendungselementen zugehörig ist, so dass das mindestens eine zugehörige Anwendungselement zur Bereitstellung eines Nahfeldkommunikationsdienstes oder zur Aktualisierung eines Nahfeldkommunikationsdienstes gesteuert wird; und
ein Anwenderschnittstellenelement (224), das in dem Programmspeicher (216) gespeichert ist, wobei das Anwenderschnittstellenelement (224) ein Registrierungselement (331) zum Registrieren von mindestens einem Element aus der Vielzahl von Nahfeldkommunikations-Verwaltungselementen, das mindestens einem Element aus der Vielzahl von Anwendungselementen zugehörig ist, aufweist, wobei das Anwenderschnittstellenelement (224) zum Bilden einer Schnittstelle mit registrierten Nahfeldkommunikations-Verwaltungselementen und zum Bereitstellen von Informationen für einen Anwender bezüglich der Nahfeldkommunikationsdienste dient, die von der Vielzahl von Anwendungselementen (302-312) bereitgestellt werden, die den registrierten Nahfeldkommunikations-Verwaltungselementen zugehörig sind, wobei im Betrieb das Anwenderschnittstellenelement (224), ansprechend auf eine Anwenderauswahl eines Nahfeldkommunikationsdienstes basierend auf den vom Anwender bereitgestellten Informationen, des Weiteren dazu ausgestaltet ist, das Nahfeldkommunikations-Verwaltungselement des ausgewählten Nahfeldkommunikationsdienstes zur Verwaltung des mindestens einen zugehörigen Anwendungselements zu aktivieren,
wobei das Anwenderschnittstellenelement (224) dazu ausgestaltet ist, Informationen bezüglich der registrierten Nahfeldkommunikations-Verwaltungselemente und der Vielzahl der den registrierten Nahfeldkommunikations-Verwaltungselementen zugehörigen Anwendungselementen zu empfangen, die empfangenen Informationen zur Bereitstellung von verarbeiteten Informationen bezüglich der Vielzahl von verfügbaren Nahfeldkommunikationsdiensten zu verarbeiten und die verarbeiteten Informationen dem Anwender bereitzustellen.

2. Drahtlose Kommunikationsvorrichtung nach Anspruch 1, wobei jedes der Vielzahl von Nahfeldkommunikations-Verwaltungselementen (226, 318-328) dazu ausgestaltet ist, einen Nahfeldkommunikationsdienst durch Hinzufügen eines neuen Anwendungselements zu der Nahfeldkommunikationseinheit (218), durch Aktualisieren von einem oder mehreren Parametern des mindestens einen zugehörigen Anwendungselements und durch Entfernen des mindestens einen zugehörigen Anwendungselements, das in der Nahfeldkommunikationseinheit (218) gespeichert ist, zu aktualisieren.

3. Drahtlose Kommunikationsvorrichtung nach Anspruch 1 oder 2, wobei jeder der Vielzahl von Nahfeldkommunikationsdiensten, der der gespeicherten Vielzahl von Anwendungselementen (302-312) zugehörig ist, mit einer Art von Nahfeldkommunikationsdienst verbunden ist, und wobei das Anwenderschnittstellenelement (224) dazu ausgestaltet ist, die empfangenen Informationen durch Sortieren der Vielzahl von Nahfeldkommunikationsdiensten nach der Art zu verarbeiten, so dass die verarbeiteteten Informationen, die dem Anwender bereitgestellt werden, eine Liste der verschiedenen Arten der Vielzahl von Nahfeldkommunikationsdiensten aufweisen.

4. Drahtlose Kommunikationsvorrichtung nach Anspruch 3, wobei die verarbeiteten Informationen, die dem Anwender bereitgestellt werden, des Weiteren für jede Art von Nahfeldkommunikationsdienst eine Liste der Nahfeldkommunikationsdienste dieser Art aufweisen.

5. Drahtlose Kommunikationsvorrichtung nach einem der vorhergehenden Ansprüche, wobei die Nahfeldkommunikationseinheit (218) des Weiteren dazu ausgestaltet ist, ein Datenbankelement (316) zum Speichern von Übersichtsinformationen für die Vielzahl von Anwendungselementen (302-312) zu speichern.

6. Drahtlose Kommunikationsvorrichtung nach Anspruch 5, wobei die Übersichtsinformationen mindestens eines der folgenden aufweisen:
eine Liste der Vielzahl von Nahfeldkommunikationsdiensten, die der gespeicherten Vielzahl von Anwendungselementen (302-312) zugehörig sind;
eine Liste der verschiedenen Arten von Nahfeldkommunikationsdiensten, die von der Vielzahl von Nahfeldkommunikationsdiensten bereitgestellt werden; und
mindestens einen Parameter eines jeden der Vielzahl von Anwendungselementen (302-312), wobei der mindestens eine Parameter eines Anwendungselements eines der folgenden aufweist: eine graphische Darstellung des Anwendungselements, ein Identifizierungsmerkmal des Anwendungselements und einen Sperrcode für das Anwendungselement.

7. Drahtlose Kommunikationsvorrichtung nach einem der vorhergehenden Ansprüche, die des Weiteren eine Vielzahl von Anwendungsprogrammschnittstellen (332-342) umfasst, wobei jede der Vielzahl von Anwendungsprogrammschnittstellen (332-342) einem entsprechenden Element der Vielzahl von Nahfeldkommunikations-Verwaltungselementen (318-328) zugehörig ist, und zur Bereitstellung einer Schnittstelle zwischen dem entsprechenden Nahfeldkommunikations-Verwaltungselement und dem Anwenderschnittstellenelement (224), wobei das Anwenderschnittstellenelement (224) dazu ausgestaltet ist, ein Nahfeldkommunikations-Verwaltungselement zur Einleitung eines Nahfeldkommunikationsdienstes oder zur Aktualisierung des mindestens einen zugehörigen Anwendungselements oder zur Abfrage von Informationen bezüglich des mindestens einen zugehörigen Anwendungselements durch die entsprechende Anwendungsprogrammschnittstelle (332-342) zu aktivieren.

8. Drahtlose Kommunikationsvorrichtung nach einem der vorhergehenden Ansprüche, wobei das Anwenderschnittstellenelement (224) dazu ausgestaltet ist, Informationen bezüglich der registrierten Nahfeldkommunikations-Verwaltungselemente und der Vielzahl von Anwendungselementen, die den registrierten Nahfeldkommunikations-Verwaltungselementen zugehörig sind, zu empfangen, wenn die Anwendungselemente in der Nahfeldkommunikationseinheit (218) geladen und installiert oder aktualisiert oder personalisiert sind.

9. Drahtlose Kommunikationsvorrichtung nach einem der vorhergehenden Ansprüche, wobei das Anwenderschnittstellenelement (224) dazu ausgestaltet ist, die empfangenen Informationen so zu verarbeiten, dass verarbeitete Informationen bezüglich der Vielzahl von verfügbaren Nahfeldkommunikationsdiensten in einem einheitlichen Format bereitgestellt werden.

10. Verfahren zur Bereitstellung eines Nahfeldkommunikationsdienstes durch eine drahtlose Kommunikationsvorrichtung (102), wobei die drahtlose Kommunikationsvorrichtung folgendes aufweist: eine Verarbeitungseinheit (200) zur Durchführung einer operativen Verarbeitung für die drahtlose Kommunikationsvorrichtung (102), eine Nahfeldkommunikationseinheit (218) zum sicheren Speichern einer Vielzahl von Anwendungselementen (302-312) zur Verwendung bei der Bereitstellung einer Vielzahl von Nahfeldkommunikationsdiensten, einen Programmspeicher (216), eine Vielzahl von Nahfeldkommunikations-Verwaltungselementen (226, 318-328), die in dem Programmspeicher (216) gespeichert sind, wobei jedes der Vielzahl von Nahfeldkommunikations-Verwaltungselementen (318-328) mindestens einem der Vielzahl von in der Nahfeldkommunikationseinheit (218) gespeicherten Anwendungselementen (302-312) zur Verwaltung des mindestens einen zugehörigen Anwendungselements aus der Vielzahl von Anwendungselementen zugehörig ist, so dass das mindestens eine zugehörige Anwendungselement zur Bereitstellung eines Nahfeldkommunikationsdienstes oder zur Aktualisierung eines Nahfeldkommunikationsdienstes gesteuert wird, und ein Anwenderschnittstellenelement (224), das in dem Programmspeicher (216) gespeichert ist, wobei das Anwenderschnittstellenelement (224) ein Registrierungselement (331) zum Registrieren von mindestens einem Element aus der Vielzahl von Nahfeldkommunikations-Verwaltungselementen, das mindestens einem Element aus der Vielzahl von Anwendungselementen zugehörig ist, aufweist, wobei das Anwenderschnittstellenelement (224) zum Bilden einer Schnittstelle mit registrierten Nahfeldkommunikations-Verwaltungselementen dient, wobei das Verfahren folgendes aufweist:
Bereitstellen, durch das Anwenderschnittstellenelement (224), von Informationen für einen Anwender bezüglich der Nahfeldkommunikationsdienste, die von der Vielzahl von Anwendungselementen bereitgestellt werden, die den registrierten Nahfeldkommunikations-Verwaltungselementen zugehörig sind, wobei das Bereitstellen ein Empfangen durch das Anwenderschnittstellenelement (224) von Informationen bezüglich der registrierten Nahfeldkommunikations-Verwaltungselemente und der Vielzahl von Anwendungselementen, die den registrierten Nahfeldkommunikations-Verwaltungselementen zugehörig sind, ein Verarbeiten der empfangenen Informationen zur Bereitstellung von verarbeiteten Informationen bezüglich der Vielzahl von verfügbaren Nahfeldkommunikationsdiensten und ein Bereitstellen der verarbeiteten Informationen für den Anwender aufweist;
Auswählen, durch einen Anwender, eines Nahfeldkommunikationsdienstes basierend auf den vom Anwender bereitgestellten Informationen; und
Aktivieren, durch das Anwenderschnittstellenelement (224), des Nahfeldkommunikations-Verwaltungselements des ausgewählten Nahfeldkommunikationsdienstes zur Verwaltung des mindestens einen zugehörigen Anwendungselements.

11. Verfahren nach Anspruch 10, wobei Informationen bezüglich der registrierten Nahfeldkommunikations-Verwaltungselemente und der Vielzahl von Anwendungselementen, die den registrierten Nahfeldkommunikations-Verwaltungselementen zugehörig sind, von dem Anwenderschnittstellenelement (224) empfangen werden, wenn die Anwendungselemente in der Nahfeldkommunikationseinheit (218) geladen und installiert oder aktualisiert oder personalisiert sind.

12. Verfahren nach Anspruch 10 oder 11, wobei das Verarbeiten ein Verarbeiten der empfangenen Informationen aufweist, so dass verarbeitete Informationen bezüglich der Vielzahl von verfügbaren Nahfeldkommunikationsdiensten in einem einheitlichen Format bereitgestellt werden.

## Revendications

1. Dispositif de communication sans fil (102) pour fournir au moins un service de Communication à Champ Proche à un utilisateur, le dispositif de communication sans fil (102) comprenant :
une unité de traitement (200) pour exécuter un traitement opérationnel pour le dispositif de communication sans fil (102) ;
une unité de Communication à Champ Proche (218) pour stocker d'une manière sûre une pluralité d'éléments d'application (302-312) pour l'utilisation dans la fourniture d'une pluralité de services de Communication à Champ Proche, l'unité de Communication à Champ Proche (218) étant couplée d'une manière communicable à l'unité de traitement (200) ;
une mémoire de programmes (216) ;
une pluralité d'éléments de gestion de la Communication à Champ Proche (226, 318-328) stockés dans la mémoire de programmes (216), chacun de la pluralité d'éléments de gestion de la Communication à Champ Proche (318-312) étant associé à au moins un de la pluralité d'éléments d'application (302-312) stockés dans l'unité de Communication à Champ Proche (218) pour gérer le au moins un élément d'application associé de la pluralité d'éléments d'application de manière à commander le au moins un élément d'application associé pour fournir un service de Communication à Champ Proche ou pour mettre à jour un service de communication à Champ Proche ; et
un élément d'interface utilisateur (224) stocké dans la mémoire de programmes (216), l'élément d'interface utilisateur (224) incluant un élément d'enregistrement (331) pour enregistrer au moins un de la pluralité d'éléments de gestion de la Communication à Champ Proche associé à au moins un de la pluralité d'éléments d'application, l'élément d'interface utilisateur (224) étant prévu pour l'interfaçage avec les éléments de gestion enregistrés de la Communication à Champ Proche, et pour fournir l'information à un utilisateur se rapportant aux services de Communication à Champ Proche fournis par la pluralité d'éléments d'application (302-312) associés aux éléments de gestion enregistrés de la Communication à Champ Proche, où en cours de fonctionnement, l'élément d'interface utilisateur (224) en réponse à la sélection par l'utilisateur d'un service de Communication à Champ Proche basé sur l'information fournie à l'utilisateur est en outre agencé pour activer l'élément de gestion de la Communication à Champ Proche du service sélectionné de la Communication à Champ Proche pour gérer le au moins un élément d'application associé,
où l'élément d'interface utilisateur (224) est agencé pour recevoir l'information se rapportant aux éléments de gestion enregistrés de la Communication à Champ Proche et à la pluralité d'éléments d'application associés aux éléments de gestion enregistrés de la Communication à Champ Proche, afin de traiter l'information reçue de manière à fournir l'information traitée se rapportant à la pluralité de services disponibles de la Communication à Champ Proche et pour fournir l'information traitée à l'utilisateur.

2. Dispositif de communication sans fil selon la revendication 1, dans lequel chacun de la pluralité d'éléments de gestion de la Communication à Champ Proche (226, 318-328) est agencé pour la mise à jour d'un service de Communication à Champ Proche en ajoutant un nouveau élément d'application à l'unité de Communication à Champ Proche (218), en mettant à jour un ou plusieurs paramètres du au moins un élément d'application associé, et en supprimant le au moins un élément d'application associé stocké dans l'unité de Communication à Champ Proche (218).

3. Dispositif de communication sans fil selon la revendication 1 ou 2, dans lequel chacun de la pluralité de services de Communication à Champ Proche associés à la pluralité stockée d'éléments d'application (302-312) est lié à un type de service de Communication à Champ Proche, et où l'élément d'interface utilisateur (224) est agencé pour traiter l'information reçue en triant la pluralité de services de Communication à Champ Proche selon le type de telle sorte que l'information traitée, fournie à l'utilisateur, inclut une liste de différents types de la pluralité de services de Communication à Champ Proche.

4. Dispositif de communication sans fil selon la revendication 3, dans lequel l'information traitée, fournie à l'utilisateur, comprend en outre pour chaque type de service de Communication à Champ Proche, une liste des services de Communication à Champ Proche de ce type.

5. Dispositif de communication sans fil selon l'une quelconque des revendications précédentes, dans lequel l'unité de Communication à Champ Proche (218) est en outre agencée pour stocker un élément de base de données (316) pour stocker un résumé des informations pour la pluralité d'éléments d'application (302-312).

6. Dispositif de communication sans fil selon la revendication 5, dans lequel le résumé des informations comprend au moins un de :
une liste de la pluralité de services de Communication à Champ Proche associés à la pluralité d'éléments d'application (302-312) stockés ;
une liste de différents types de services de Communication à Champ Proche fournis par la pluralité de services de Communication à Champ Proche ; et
au moins un paramètre de chacun de la pluralité d'éléments d'application (302-312), le au moins un paramètre d'un élément d'application incluant un des suivants : une représentation graphique de l'élément d'application, un identifiant de l'élément d'application et un code de verrouillage pour l'élément d'application.

7. Dispositif de communication sans fil selon l'une quelconque des revendications précédentes, comprenant en outre une pluralité d'Interfaces de Programmes d'Application (332-342), chacune de la pluralité d'Interfaces de Programmes d'Application (332-342) étant associé à un élément respectif de la pluralité d'éléments de gestion de la Communication à Champ Proche (318-328) et pour réaliser une interface entre l'élément de gestion respectif de la Communication à Champ Proche et l'élément d'interface utilisateur (224), où l'élément d'interface utilisateur (224) est agencé pour activer un élément de gestion de la Communication à Champ Proche afin d'initier un service de Communication à Champ Proche ou pour mettre à jour le au moins un élément d'application associé ou pour extraire l'information se rapportant à au moins un élément d'application associé précité par l'Interface de Programmes d'Application respective (332-342).

8. Dispositif de communication sans fil selon l'une quelconque des revendications précédentes, dans lequel l'élément d'interface utilisateur (224) est agencé pour recevoir l'information se rapportant aux éléments de gestion enregistrés de la Communication à Champ Proche et à la pluralité d'éléments d'application associés aux éléments de gestion enregistrés de la Communication à Champ Proche lorsque les éléments d'application sont chargés et installés ou mis à jour ou personnalisés dans l'unité de Communication à Champ Proche (218).

9. Dispositif de communication sans fil selon l'une quelconque des revendications précédentes, dans lequel l'élément d'interface utilisateur (224) est agencé pour traiter l'information reçue de manière à fournir l'information traitée se rapportant à la pluralité de services disponibles de la Communication à Champ Proche en un format uniforme.

10. Procédé pour fournir un service de Communication à Champ Proche par un dispositif de communication sans fil (102), le dispositif de communication sans fil (102) ayant une unité de traitement (200) pour exécuter un traitement opérationnel pour le dispositif de communication sans fil (102), une unité de Communication à Champ Proche (218) pour stocker d'une manière sûre une pluralité d'éléments d'application (302-312) pour l'utilisation dans la fourniture d'une pluralité de services de Communication à Champ Proche, une mémoire de programmes (216), une pluralité d'éléments de gestion de la Communication à Champ Proche (226, 318-328) stockés dans la mémoire de programmes (216), chacun de la pluralité d'éléments de gestion de la Communication à Champ Proche (318-328) étant associé à au moins un de la pluralité d'éléments d'application (302-312) stockés dans l'unité de Communication à Champ Proche (218) pour gérer le au moins un élément d'application associé de la pluralité d'éléments d'application de manière à commander le au moins un élément d'application associé pour fournir un service de Communication à Champ Proche ou pour mettre à jour un service de Communication à Champ Proche, et un élément d'interface utilisateur (224) stocké dans la mémoire de programmes (216), l'élément d'interface utilisateur (224) incluant un élément d'enregistrement (331) pour enregistrer au moins un de la pluralité d'éléments de gestion de la Communication à Champ Proche associés à au moins un de la pluralité d'éléments d'application, l'élément d'interface utilisateur (224) étant prévu pour l'interfaçage avec les éléments de gestion enregistrés de la Communication à Champ Proche, le procédé comprenant :
fournir par l'élément d'interface utilisateur (224) l'information à un utilisateur se rapportant aux services de Communication à Champ Proche fournis par la pluralité d'éléments d'application associés aux éléments de gestion enregistrés de la Communication à Champ Proche, où la fourniture inclut la réception par l'élément d'interface utilisateur (224) de l'information se rapportant aux éléments de gestion enregistrés de la Communication à Champ Proche et à la pluralité d'éléments d'application associés aux éléments de gestion enregistrés de la Communication à Champ Proche, le traitement de l'information reçue de manière à fournir l'information traitée se rapportant à la pluralité de services de Communication à Champ Proche disponibles et la fourniture de l'information traitée à l'utilisateur ;
sélectionner par un utilisateur un service de Communication à Champ Proche basé sur l'information fournie à l'utilisateur ; et
activer par l'élément d'interface utilisateur (224) l'élément de gestion de la communication à Champ Proche du service de Communication à Champ Proche sélectionné afin de gérer le au moins un élément d'application associé.

11. Procédé selon la revendication 10, dans lequel l'information se rapportant aux éléments de gestion de Communication à Champ Proche enregistrés et à la pluralité d'éléments d'application associés aux éléments de gestion de Communication à Champ Proche enregistrés est reçue par l'élément d'interface utilisateur (224) lorsque les éléments d'application sont chargés et installés ou mis à jour ou personnalisés dans l'unité de Communication à Champ Proche (218).

12. Procédé selon la revendication 10 ou 11, dans lequel le traitement inclut le traitement de l'information reçue de manière à fournir l'information traitée se rapportant à la pluralité de services de Communication à champ Proche disponibles en un format uniforme.
